# EUROPÄISCHE PATENTANMELDUNG

(11) **EP 2 666 587 A1**
(43) Veröffentlichungstag der Anmeldung: **27.11.2013**
(21) Anmeldenummer: 13163743.1
(22) Anmeldetag: 15.04.2013
(51) Int. Cl.: B23Q 11/00, A01G 3/053

(54) **Werkzeugmaschinensicherheitsschaltvorrichtung**

(30) Priorität: 21.05.2012 DE 102012009853
(71) Anmelder: ROBERT BOSCH GMBH, 70442 Stuttgart (DE)
(72) Erfinder: Zador, Endre, Ipswich, Suffolk (County), IP1 3LJ (GB); Nagy, Janos, 3443 Meznagymihaly (HU)

(57) **Zusammenfassung**

Die Erfindung geht aus von einer Werkzeugmaschinensicherheitsschaltvorrichtung, insbesondere von einer Handwerkzeugmaschinensicherheitsschaltvorrichtung, mit zumindest einer Schalteinheit (12) und mit zumindest einer Betätigungseinheit (14), die zu einer Betätigung der Schalteinheit (12) zumindest zwei beweglich gelagerte Bedienelemente (16, 18) aufweist, die infolge einer gemeinsamen Betätigung die Schalteinheit (12) in zumindest einen aktivierten Schaltzustand versetzen und die jeweils zumindest eine Lagerfläche (20, 90) aufweisen.

Es wird vorgeschlagen, dass zumindest eines der Bedienelemente (16, 18) zumindest eine von einer Lagerfläche (20) des zumindest einen Bedienelements (16, 18) verschiedene Führungsfläche (22, 24) zu einer zumindest weitestgehenden Vermeidung einer Querbewegung zumindest eines Teilbereichs des zumindest einen Bedienelements (16, 18) während einer Bewegung des zumindest einen Bedienelements (16, 18) aufweist.

## Beschreibung

### Stand der Technik

Es sind bereits Werkzeugmaschinensicherheitsschaltvorrichtungen bekannt, die eine Schalteinheit und eine Betätigungseinheit umfassen, die zu einer Betätigung der Schalteinheit zwei beweglich gelagerte Bedienelemente aufweist, die infolge einer gemeinsamen Betätigung die Schalteinheit in einen aktivierten Schaltzustand versetzen und die jeweils eine Lagerfläche aufweisen.

### Offenbarung der Erfindung

Die Erfindung geht aus von einer Werkzeugmaschinensicherheitsschaltvorrichtung, insbesondere von einer Handwerkzeugmaschinensicherheitsschaltvorrichtung, mit zumindest einer Schalteinheit und mit zumindest einer Betätigungseinheit, die zu einer Betätigung der Schalteinheit zumindest zwei beweglich gelagerte Bedienelemente aufweist, die infolge einer gemeinsamen Betätigung die Schalteinheit in zumindest einen aktivierten Schaltzustand versetzen und die jeweils zumindest eine Lagerfläche aufweisen.

Es wird vorgeschlagen, dass zumindest eines der Bedienelemente zumindest eine von einer Lagerfläche des zumindest einen Bedienelements verschiedene Führungsfläche zu einer zumindest weitestgehenden Vermeidung einer Querbewegung zumindest eines Teilbereichs des zumindest einen Bedienelements während einer Bewegung des zumindest einen Bedienelements aufweist. Die Führungsfläche ist bevorzugt dazu vorgesehen, eine zumindest im Wesentlichen quer zu einer durch die bewegliche Lagerung bedingte Bewegungsbahn des zumindest einen Betätigungselements verlaufende Querbewegung des zumindest einen Bedienelements zumindest weitestgehend zu vermeiden. Unter "im Wesentlichen quer" soll hier insbesondere eine Ausrichtung einer Richtung und/oder einer Achse relativ zu einer Bezugsrichtung und/oder einer Bezugsachse verstanden werden, wobei die Ausrichtung der Richtung und/oder der Achse zumindest verschieden von einer zumindest im Wesentlichen parallelen Ausrichtung zur Bezugsrichtung und/oder zur Bezugsachse ist und insbesondere windschief oder senkrecht zur Bezugsrichtung und/oder zur Bezugsachse ist. Unter "vorgesehen" soll insbesondere speziell ausgelegt und/oder speziell ausgestattet verstanden werden.

Die Betätigungseinheit umfasst insbesondere zumindest ein erstes Bedienelement und zumindest ein zweites Bedienelement. Bevorzugt weist das erste Bedienelement zumindest eine Querführungsfläche auf, die in einem Bereich eines Schalterbetätigungsfortsatzes des ersten Bedienelements angeordnet ist. Vorzugsweise sind die zumindest zwei Bedienelemente unabhängig voneinander beweglich gelagert. Hierbei sind die zumindest zwei Bedienelemente insbesondere drehbar um jeweils eine Bewegungsachse gelagert. Die zumindest zwei Bedienelemente werden infolge einer Betätigung zu einer Überführung der Schalteinheit in einen aktivierten Zustand bevorzugt von einem Bediener in zwei entgegengesetzt verlaufende Richtungen bewegt. Die Schalteinheit ist vorzugsweise als elektrische Schalteinheit ausgebildet. Hierbei wird bevorzugt durch eine Bewegung eines Schaltelements der Schalteinheit durch eine gemeinsame Betätigung der zumindest zwei Bedienelemente ein elektrischer Schaltkreis, insbesondere ein Stromkreis, einer Schaltanordnung der Schalteinheit geschlossen. Die Schalteinheit ist insbesondere zu einer Aktivierung und/oder zu einer Deaktivierung einer Bestromung einer Motoreinheit einer Werkzeugmaschine infolge einer gemeinsamen Betätigung durch die zumindest zwei Bedienelemente vorgesehen. Hierbei ist die Schalteinheit vorzugsweise als Mikroschalter ausgebildet, der in einem Schaltkreis, insbesondere in einem Stromkreis, der Werkzeugmaschine angeordnet ist und somit elektrisch mit der Motoreinheit verbunden ist. Unter einer "gemeinsamen Betätigung" soll in diesem Zusammenhang insbesondere verstanden werden, dass die Bedienelemente zur Aktivierung der Motoreinheit beide gleichzeitig betätigt sein müssen, d.h., dass die Motoreinheit lediglich aktiviert ist und aktiviert bleibt, wenn beide Bedienelemente betätigt sind und somit sich beide in einem betätigten Zustand befinden. Vorzugsweise ist die Aktivierung der Motoreinheit unabhängig von einer Reihenfolge der Betätigung der Bedienelemente, d.h., es kommt nicht darauf an, welches der Bedienelemente zuerst betätigt wird. Der Ausdruck "aktivierter Schaltzustand" soll hier insbesondere ein Zustand der Schalteinheit definieren, in der das Schaltelement betätigt ist und ein Schaltkreis für einen Stromfluss geschlossen ist, insbesondere zu einer Bestromung einer mit der Schalteinheit elektrisch verbundenen Motoreinheit.

Unter einem "Bedienelement" soll insbesondere ein Element verstanden werden, dass dazu vorgesehen ist, bei einem Bedienvorgang eine Eingabegröße von einem Bediener aufzunehmen und insbesondere unmittelbar von einem Bediener kontaktiert zu werden, wobei ein Berühren des Elements sensiert und/oder eine auf das Element ausgeübte Betätigungskraft sensiert und/oder mechanisch zur Betätigung einer Einheit weiter geleitet wird. Der Begriff "Lagerfläche" soll hier insbesondere eine Fläche des zumindest einen Bedienelements definieren, die zu einer beweglichen Lagerung des zumindest einen Bedienelements mit einem Lagerelement, wie beispielsweise einem Lagerbolzen, einer Axiallagernut usw. zusammenwirkt, das eine Bewegungsachse des zumindest einen Bedienelements vorgibt.

Unter einer "Führungsfläche" soll hier insbesondere eine Fläche verstanden werden, die zu einer Einwirkung von Zwangskräften auf das zumindest eine Bedienelement dazu vorgesehen ist, mit einer Gegenführungsfläche zusammenzuwirken. Mittels eines Zusammenwirkens der Führungsfläche und der Gegenführungsfläche können Zwangskräfte entlang einer zumindest im Wesentlichen quer zu einer Bewegungsbahn des zumindest einen Bedienelements verlaufenden Richtung zu einer Beibehaltung der Bewegungsbahn während einer Bewegung des zumindest einen Bedienelements auf das zumindest eine Bedienelement einwirken. Insbesondere weist die Führungsfläche, betrachtet entlang einer zumindest im Wesentlichen senkrecht zu einer Bewegungsachse des zumindest einen Bedienelements verlaufenden Richtung, einen Abstand relativ zur Bewegungsachse des zumindest einen Bedienelements auf, der größer ist als 2 mm, bevorzugt größer ist als 4 mm und besonders bevorzugt größer ist als 10 mm. Besonders bevorzugt weist das zumindest eine Bedienelement zumindest zwei Führungsflächen auf, die an zwei sich abgewandten Seiten des zumindest einen Bedienelements angeordnet sind. Der Ausdruck "im Wesentlichen senkrecht" soll hier insbesondere eine Ausrichtung einer Richtung relativ zu einer Bezugsrichtung definieren, wobei die Richtung und die Bezugsrichtung, insbesondere in einer Ebene betrachtet, einen Winkel von 90° einschließen und der Winkel eine maximale Abweichung von insbesondere kleiner als 8°, vorteilhaft kleiner als 5° und besonders vorteilhaft kleiner als 2° aufweist. Mittels der erfindungsgemäßen Ausgestaltung der Werkzeugmaschinensicherheitsschaltvorrichtung kann vorteilhaft eine präzise Betätigung der Schalteinheit realisiert werden. Zudem können vorteilhaft große Toleranzbereiche bei einer Fertigung des zumindest einen Bedienelements erreicht werden, da vorteilhaft eine Kompensierung von Toleranzen durch die Führungsfläche, insbesondere durch eine Vermeidung von Querbewegungen durch die Führungsfläche realisiert werden können. Somit kann vorteilhaft eine kostengünstige Produktion realisiert werden.

Des Weiteren wird vorgeschlagen, dass die Führungsfläche in einem Bereich eines Schalterbetätigungsfortsatzes des zumindest einen Bedienelements angeordnet ist. Der Schalterbetätigungsfortsatz des zumindest einen Bedienelements ist insbesondere zu einer Betätigung des Schaltelements der Schalteinheit infolge einer Betätigung der zwei Bedienelemente vorgesehen. Hierbei weist die Führungsfläche insbesondere einen Abstand zu einer Betätigungsfläche des Schalterbetätigungsfortsatzes auf, der kleiner ist als 20 mm, bevorzugt kleiner ist als 15 mm und besonders bevorzugt kleiner ist als 10 mm. Mittels der erfindungsgemäßen Ausgestaltung kann konstruktiv einfach eine präzise Führung des zumindest einen Bedienelements im Bereich des Schalterbetätigungsfortsatzes erreicht werden.

Ferner wird vorgeschlagen, dass die Führungsfläche sich in einer Ebene erstreckt, die zumindest im Wesentlichen senkrecht zu einer Bewegungsachse des zumindest einen Bedienelements verläuft. Hierdurch kann konstruktiv einfach eine Vermeidung einer Querbewegung des zumindest einen Bedienelements erreicht werden.

Zudem wird vorgeschlagen, dass die Führungsfläche in einem montierten Zustand entlang einer Bewegungsstrecke des zumindest einen Bedienelements zwischen zumindest zwei entlang der Bewegungsstrecke des zumindest einen Bedienelements beabstandet angeordneten Bewegungsbegrenzungselementen der Betätigungseinheit angeordnet ist. Der Ausdruck "zwischen" soll hier insbesondere eine Anordnung von Elementen relativ zueinander definieren, wobei eine gedachte Gerade alle Elemente schneidet. Bevorzugt schneidet eine zumindest im Wesentlichen senkrecht zu einer Begrenzungsfläche eines der Bewegungsbegrenzungselemente verlaufende, gedachte Gerade die Bewegungsbegrenzungselemente und die Führungsfläche. Mittels der erfindungsgemäßen Ausgestaltung kann vorteilhaft eine kompakte Anordnung von Funktionsbereichen des zumindest einen Bedienelements erreicht werden.

Des Weiteren wird vorgeschlagen, dass die Führungsfläche an einem Ende des zumindest einen Bedienelements angeordnet ist, das von einer Bediengrifffläche des zumindest einen Bedienelements abgewandt ist. Unter einer "Bediengrifffläche" soll hier insbesondere eine Fläche des zumindest einen Bedienelements verstanden werden, die in einem montierten Zustand des zumindest einen Bedienelements von einem Bediener zu einer Betätigung des zumindest einen Bedienelements greifbar ist. Bevorzugt steht die Bediengrifffläche des zumindest einen Bedienelements in einem montierten Zustand aus einem Werkzeugmaschinengehäuse einer die Werkzeugmaschinensicherheitsschaltvorrichtung umfassende Werkzeugmaschine heraus. Die Führungsfläche ist, betrachtet entlang einer in einer sich zumindest im Wesentlichen senkrecht zur Bewegungsachse des zumindest einen Bedienelements erstreckenden Ebene verlaufenden Haupterstreckungsrichtung des zumindest einen Bedienelements, an einem Ende des zumindest einen Bedienelements angeordnet, das von einer Bediengrifffläche des zumindest einen Bedienelements abgewandt ist. Mittels der erfindungsgemäßen Ausgestaltung kann vorteilhaft einer Querbewegung des zumindest einen Bedienelements entgegengewirkt werden, insbesondere kann vorteilhaft einer Hebelwirkung und somit einer Querbewegung des von der Bediengrifffläche des zumindest einen Bedienelements abgewandten Endes durch die Führungsfläche entgegengewirkt werden.

Ferner wird vorgeschlagen, dass die Führungsfläche zumindest von einer Anschlagfläche des zumindest einen Bedienelements begrenzt wird. Die Anschlagfläche ist bevorzugt dazu vorgesehen, zu einer Begrenzung einer Bewegungsstrecke des zumindest einen Bedienelements mit einem der Bewegungsbegrenzungselemente zusammenzuwirken. Besonders bevorzugt verläuft die Anschlagfläche zumindest im Wesentlichen senkrecht zur Führungsfläche. Somit kann konstruktiv einfach eine Begrenzung der Führungsfläche erreicht werden. Zudem wird vorgeschlagen, dass die Betätigungseinheit zumindest zwei Bewegungsbegrenzungselemente zu einer Begrenzung einer mit der Führungsfläche zusammenwirkenden Gegenführungsfläche der Betätigungseinheit aufweist. Bevorzugt sind die Bewegungsbegrenzungselemente an die Gegenführungsfläche angeformt. Somit sind die Bewegungsbegrenzungselemente insbesondere über die Gegenführungsfläche miteinander verbunden. Es kann konstruktiv eine Gegenführungsfläche realisiert werden, die sich entlang einer gesamten, möglichen Bewegungsstrecke erstreckt. Somit kann eine vorteilhafte Führung des zumindest einen Bedienelements bei einer Bewegung des zumindest einen Bedienelements erreicht werden.

Des Weiteren wird vorgeschlagen, dass die Betätigungseinheit zumindest zwei Bewegungsbegrenzungselemente umfasst, die sich zumindest im Wesentlichen quer zu einer Gegenführungsfläche der Betätigungseinheit erstrecken. Hierbei erstrecken sich die Bewegungsbegrenzungselemente bevorzugt ausgehend von der Gegenführungsfläche entlang einer zumindest im Wesentlichen senkrecht zur Gegenführungsfläche verlaufenden Richtung und entlang einer zumindest im Wesentlichen parallel zur Gegenführungsfläche verlaufenden Richtung. Unter "im Wesentlichen parallel" soll hier insbesondere eine Ausrichtung einer Richtung relativ zu einer Bezugsrichtung, insbesondere in einer Ebene, verstanden werden, wobei die Richtung gegenüber der Bezugsrichtung eine Abweichung insbesondere kleiner als 8°, vorteilhaft kleiner als 5° und besonders vorteilhaft kleiner als 2° aufweist. Die Gegenführungsfläche erstreckt sich vorzugsweise in einer zumindest im Wesentlichen senkrecht zur Bewegungsachse des zumindest einen Bedienelements. Mittels der erfindungsgemäßen Ausgestaltung kann vorteilhaft eine Begrenzung einer Bewegungsstrecke des zumindest einen Bedienelements in zumindest zwei entgegengesetzt ausgerichtete Richtungen erreicht werden.

Ferner wird vorgeschlagen, dass die Schalteinheit zumindest einen Grundkörper umfasst, der an zumindest einem der Bedienelemente fixiert ist. Besonders bevorzugt ist der Grundkörper am ersten Bedienelement fixiert. Unter einem "Grundkörper" soll insbesondere ein Gehäuse der Schalteinheit verstanden werden, innerhalb dessen eine elektrische und/oder eine elektronische Schaltanordnung insbesondere zur Inbetriebnahme der Motoreinheit angeordnet ist. Unter einem "Schaltelement" soll insbesondere ein Element verstanden werden, das zur Betätigung der Schaltanordnung, insbesondere zum elektrischen Schließen der Schaltanordnung, die innerhalb des Grundkörpers angeordnet ist, vorgesehen ist. Vorteilhafterweise ragt das Schaltelement aus dem Grundkörper heraus. Mittels der erfindungsgemäßen Ausgestaltung können vorteilhaft Bauteile der Werkzeugmaschinensicherheitsschaltvorrichtung reduziert werden, wodurch Kosten, benötigter Bauraum und Gewicht der Werkzeugmaschinensicherheitsschaltvorrichtung und damit einer die Werkzeugmaschinensicherheitsschaltvorrichtung aufweisende Werkzeugmaschine verringert werden. Durch Einsparung von Bauteilen kann eine Widerstandsfähigkeit der Werkzeugmaschinensicherheitsschaltvorrichtung bzw. der Werkzeugmaschine gegen einen Eintritt von Staub, Feuchtigkeit, insbesondere Luftfeuchtigkeit und/oder Ablagerungen, erhöht werden, wodurch eine einfache und sichere Werkzeugmaschinensicherheitsschaltvorrichtung, die lediglich bei einer gleichzeitigen Betätigung der Betätigungselemente die Motoreinheit aktiviert, bereitgestellt werden kann.

Die Erfindung geht ferner aus von einer Werkzeugmaschine, insbesondere einer tragbaren Werkzeugmaschine, mit einer erfindungsgemäßen Werkzeugmaschinensicherheitsschaltvorrichtung. Unter einer "tragbaren Werkzeugmaschine" soll hier insbesondere eine Werkzeugmaschine zu einer Bearbeitung von Werkstücken verstanden werden, die von einem Bediener transportmaschinenlos transportiert werden kann. Die tragbare Werkzeugmaschine weist insbesondere eine Masse auf, die kleiner ist als 40 kg, bevorzugt kleiner ist als 10 kg und besonders bevorzugt kleiner ist als 7 kg. Die tragbare Werkzeugmaschine ist besonders bevorzugt als elektrisch betreibbare Heckenschere ausgebildet. Es ist jedoch auch denkbar, dass die tragbare Werkzeugmaschine eine andere, einem Fachmann als sinnvoll erscheinende Ausgestaltung aufweist, wie beispielsweise eine Ausgestaltung als Bohr- und/oder Meißelhammer, als Bohrmaschine, als Säbelsäge, als Stichsäge, als Heckenschere usw. Mittels der erfindungsgemäßen Ausgestaltung kann eine sichere und kostengünstige Werkzeugmaschine bereitgestellt werden, die eine hohe Lebensdauer aufweist. Vorzugsweise ist die Werkzeugmaschine zur Zweihandbedienung vorgesehen.

Die erfindungsgemäße Werkzeugmaschinensicherheitsschaltvorrichtung und/oder die erfindungsgemäße Werkzeugmaschine sollen/soll hierbei nicht auf die oben beschriebene Anwendung und Ausführungsform beschränkt sein. Insbesondere können die erfindungsgemäße Werkzeugmaschinensicherheitsschaltvorrichtung und/oder die erfindungsgemäße Werkzeugmaschine zu einer Erfüllung einer hierin beschriebenen Funktionsweise eine von einer hierin genannten Anzahl von einzelnen Elementen, Bauteilen und Einheiten abweichende Anzahl aufweisen.

### Zeichnung

Weitere Vorteile ergeben sich aus der folgenden Zeichnungsbeschreibung. In der Zeichnung ist ein Ausführungsbeispiel der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine Detailansicht einer erfindungsgemäßen Werkzeugmaschine mit einer erfindungsgemäßen Werkzeugmaschinensicherheitsschaltvorrichtung in einer schematischen Darstellung,
- Fig. 2: eine Explosionsdarstellung der erfindungsgemäßen Werkzeugmaschine mit der erfindungsgemäßen Werkzeugmaschinensicherheitsschaltvorrichtung in einer schematischen Darstellung,
- Fig. 3: eine Detailansicht eines zweiten Bedienelements einer Betätigungseinheit der erfindungsgemäßen Werkzeugmaschinensicherheitsschaltvorrichtung in einer schematischen Darstellung,
- Fig. 4: eine Detailansicht eines ersten Bedienelements einer Betätigungseinheit der erfindungsgemäßen Werkzeugmaschinensicherheitsschaltvorrichtung in einer schematischen Darstellung,
- Fig. 5: eine Detailansicht der erfindungsgemäßen Werkzeugmaschinensicherheitsschaltvorrichtung in einem unbetätigten Zustand des ersten Bedienelements und einem betätigten Zustand des zweiten Bedienelements in einer schematischen Darstellung,
- Fig. 6: eine Detailansicht der erfindungsgemäßen Werkzeugmaschinensicherheitsschaltvorrichtung in einem betätigten Zustand des ersten Bedienelements und einem unbetätigten Zustand des zweiten Bedienelements in einer schematischen Darstellung und
- Fig. 7: eine Detailansicht der erfindungsgemäßen Werkzeugmaschinensicherheitsschaltvorrichtung in einem betätigten Zustand des ersten Bedienelements und einem betätigten Zustand des zweiten Bedienelements in einer schematischen Darstellung.

### Beschreibung des Ausführungsbeispiels

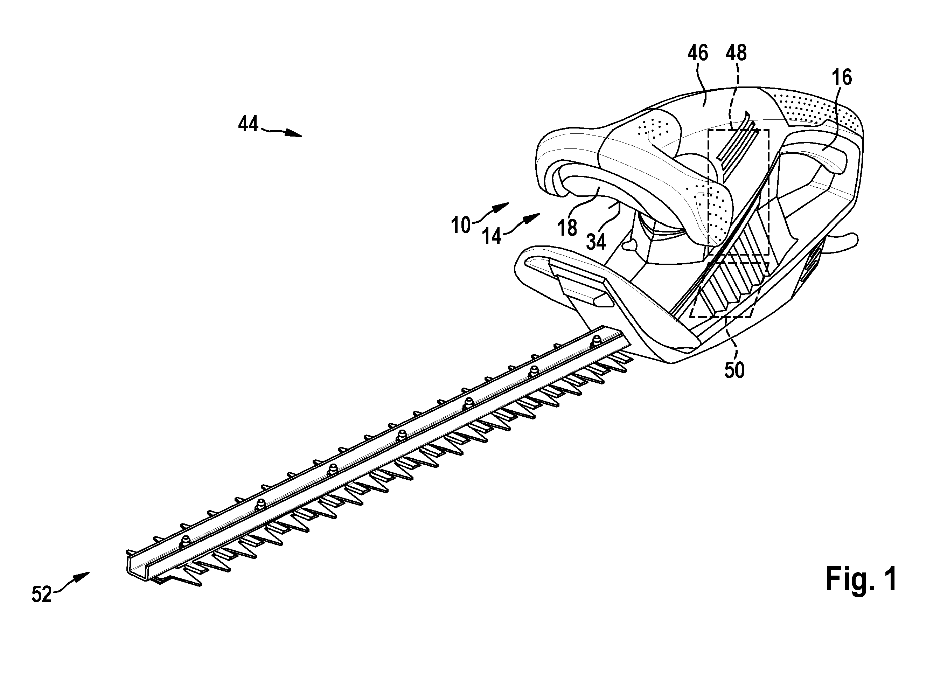

Figur 1 zeigt eine als tragbare Werkzeugmaschine ausgebildete Werkzeugmaschine 44 mit einer Werkzeugmaschinensicherheitsschaltvorrichtung 10. Die Werkzeugmaschine 44 ist als eine von einem internen Akkumulatorpaket betriebene Werkzeugmaschine ausgebildet. Grundsätzlich kann die Werkzeugmaschine 44 auch als eine von einem externen Stromnetz betriebene Werkzeugmaschine ausgebildet sein. Die Werkzeugmaschine 44 ist als eine elektrische Heckenschere ausgebildet. Hierbei weist die Werkzeugmaschine 44 ein Werkzeugmaschinengehäuse 46 auf, das eine Antriebseinheit 48 und eine Getriebeeinheit 50 der Werkzeugmaschine 44 umschließt. Zudem umschließt das Werkzeugmaschinengehäuse 46 zumindest teilweise die Werkzeugmaschinensicherheitsschaltvorrichtung 10. Die Antriebseinheit 48 und die Getriebeeinheit 50 sind zur Erzeugung eines auf eine hin- und hergehend antreibbare Messereinheit 52 der Werkzeugmaschine 44 wirkenden Antriebsmoments auf eine, einem Fachmann bereits bekannte Art und Weise wirkungsmäßig miteinander verbunden. Die Getriebeeinheit 50 ist als Exzentergetriebe ausgebildet. Die Antriebseinheit 48 ist als Elektromotoreinheit ausgebildet. Es ist jedoch auch denkbar, dass die Antriebseinheit 48 und/oder die Getriebeeinheit 50 eine andere, einem Fachmann als sinnvoll erscheinende Ausgestaltung aufweisen, wie beispielsweise eine Ausgestaltung der Antriebseinheit 48 als Hybridantriebseinheit oder als Verbrennungsantriebseinheit usw. und/oder eine Ausgestaltung der Getriebeeinheit 50 als Winkelgetriebe, als Schneckengetriebe usw.

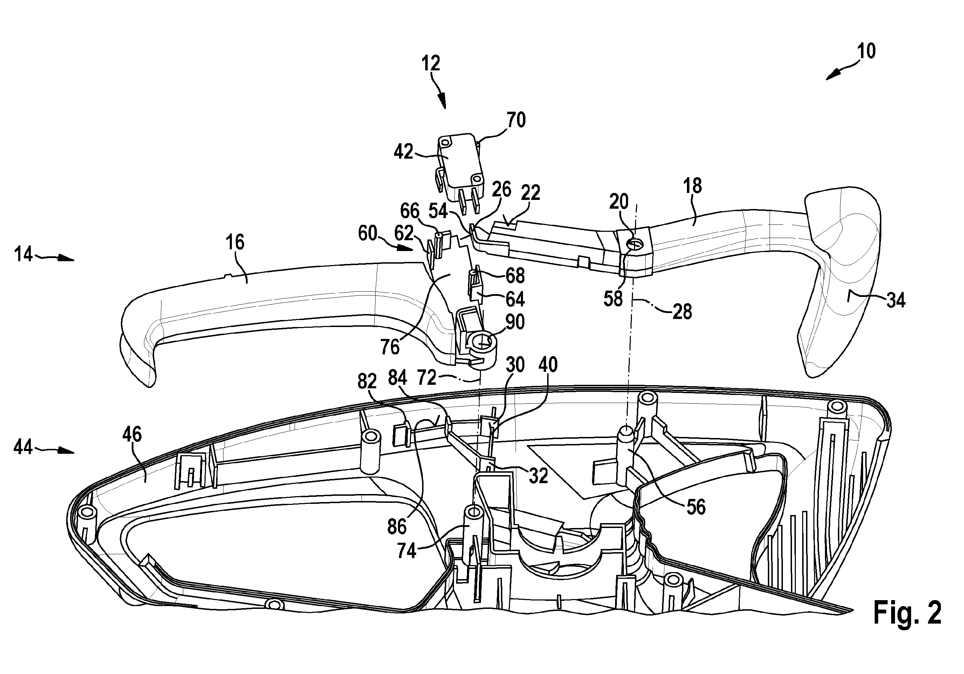

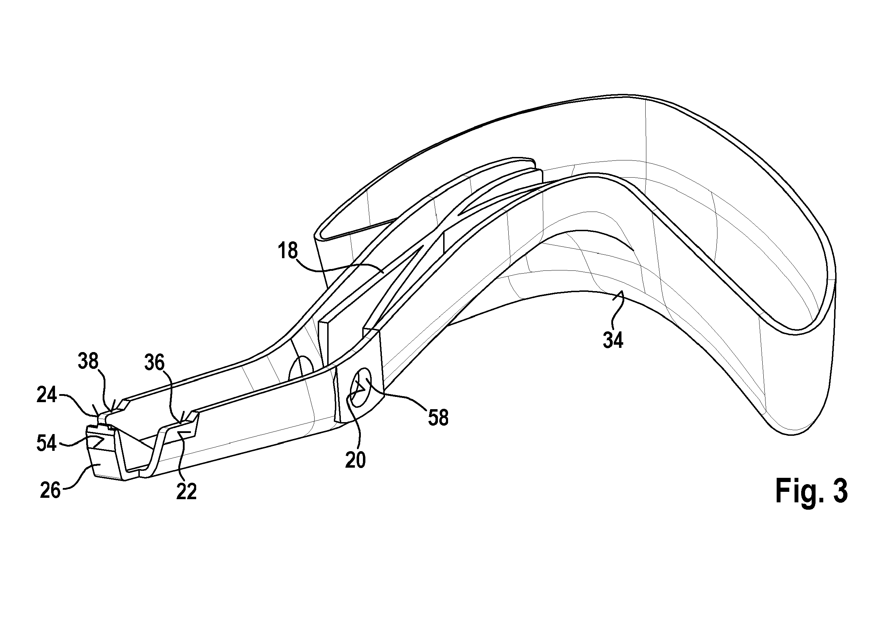

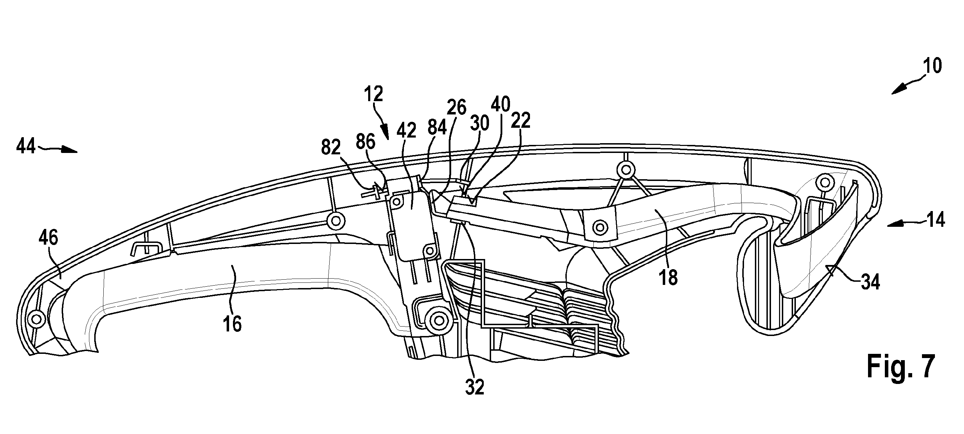

Die Werkzeugmaschinensicherheitsschaltvorrichtung 10 umfasst zumindest eine Schalteinheit 12 und zumindest eine Betätigungseinheit 14, die zu einer Betätigung der Schalteinheit 12 zumindest zwei beweglich gelagerte Bedienelemente 16, 18 aufweist, die infolge einer gemeinsamen Betätigung die Schalteinheit 12 in zumindest einen aktivierten Schaltzustand versetzen (Figur 7). Zumindest eines der Bedienelemente 16, 18 weist zumindest eine von einer Lagerfläche 20 des zumindest einen Bedienelements 16, 18 verschiedene Führungsfläche 22 zu einer Vermeidung einer Querbewegung zumindest eines Teilbereichs des zumindest einen Bedienelements 16, 18 während einer Bewegung des zumindest einen Bedienelements 16, 18 auf (Figur 2). Hierbei ist das Bedienelement 16 der Bedienelemente 16, 18, das ausgehend von einer der Messereinheit 52 abgewandten Seite des Werkzeugmaschinengehäuses 46 in Richtung der Messereinheit 52 als erstes am Werkzeugmaschinengehäuses 46 angeordnet ist, als erstes Bedienelement 16 ausgebildet. Das Bedienelement 18 der Bedienelemente 16, 18, das ausgehend von der der Messereinheit 52 abgewandten Seite des Werkzeugmaschinengehäuses 46 in Richtung der Messereinheit 52 nach dem ersten Bedienelement 16 angeordnet ist, ist als zweites Bedienelement 18 ausgebildet. Somit weißt das zweite Bedienelement 18 die von der Lagerfläche 20 des zweiten Bedienelements 18 verschiedene Führungsfläche 22 auf. Hierbei ist die Führungsfläche 22 in einem Bereich eines Schalterbetätigungsfortsatzes 26 des zweiten Bedienelements 18 angeordnet. Ferner weist das zweite Bedienelement 18 zumindest eine weitere Führungsfläche 24 auf (Figur 3). Die weitere Führungsfläche 24 ist, betrachtet entlang einer Bewegungsachse 28 des zweiten Bedienelements 18, auf einer der Führungsfläche 22 abgewandten Seite des zweiten Bedienelements 18 angeordnet. Die weitere Führungsfläche 24 ist somit ebenfalls im Bereich eines Schalterbetätigungsfortsatzes 26 des zweiten Bedienelements 18 angeordnet.

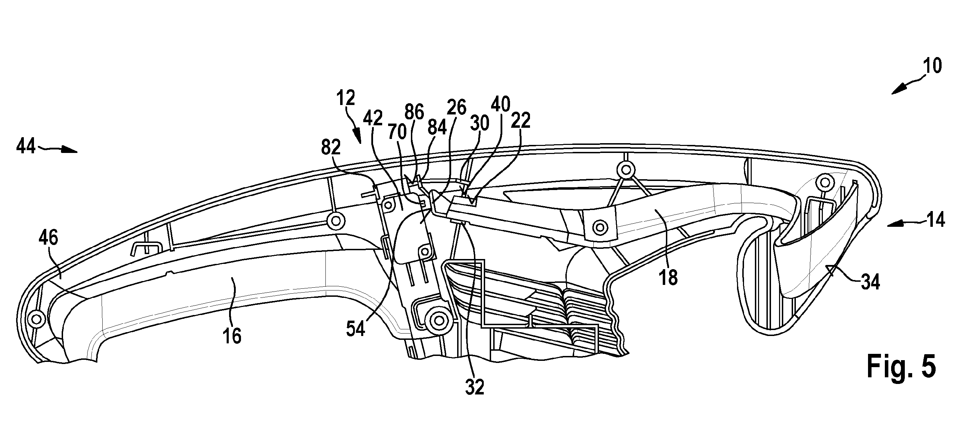

Das zweite Bedienelement 18 ist drehbar um die Bewegungsachse 28 gelagert. Die Bewegungsachse 28 des zweiten Bedienelements 18 wird hierbei von einem einstückig mit dem Werkzeugmaschinengehäuse 46 ausgebildeten Lagerbolzen 56 gebildet (Figuren 2 und 5). Die Lagerfläche 20 des zweiten Bedienelements 18 wirkt zu einer drehbaren Lagerung des zweiten Bedienelements 18 mit einer Mantelfläche des Lagerbolzens 56 zusammen. Die Lagerfläche 20 wird hierbei von einer Innenfläche einer kreisförmigen Lagerausnehmung 58 des zweiten Bedienelements 18 gebildet (Figur 3). Die Bewegungsachse 28 des zweiten Bedienelements 18 wird von einer Mittelachse des Lagerbolzens 56 gebildet. Die Führungsfläche 22 und die weitere Führungsfläche 24 sind relativ zur Bewegungsachse 28 des zweiten Bedienelements 18 beabstandet am zweiten Bedienelement 18 angeordnet. Hierbei weisen die Führungsfläche 22 und die weitere Führungsfläche 24 zur Bewegungsachse 28 des zweiten Bedienelements 18 einen größeren Abstand auf als zu einer Schalterbetätigungsfläche 54 des Schalterbetätigungsfortsatzes 26.

Des Weiteren ist die Führungsfläche 22 und die weitere Führungsfläche 24 an einem Ende des zweiten Bedienelements 18 angeordnet, das von einer Bediengrifffläche 34 des zweiten Bedienelements 18 abgewandt ist (Figur 3). Somit sind die Führungsfläche 22 und die weitere Führungsfläche 24 an dem Ende des zweiten Bedienelements 18 angeordnet, das dem ersten Bedienelement 16 zugewandt ist. Der Schalterbetätigungsfortsatz 26 des zweiten Bedienelements 18 ist ebenfalls an dem dem ersten Bedienelement 16 zugewandte Ende des zweiten Bedienelements 18 angeordnet. Die Führungsfläche 22 und die weitere Führungsfläche 24 erstrecken sich jeweils in einer Ebene, die zumindest im Wesentlichen senkrecht zur Bewegungsachse 28 des zweiten Bedienelements 18 verläuft. Somit erstrecken sich die Führungsfläche 22 und die weitere Führungsfläche 24 zumindest im Wesentlichen parallel.

Ferner werden die Führungsfläche 22 und die weitere Führungsfläche 24 des zweiten Bedienelements 18 jeweils zumindest von einer Anschlagfläche 36, 38 des zweiten Bedienelements 18 begrenzt (Figur 3). Zudem sind die Führungsfläche 22 und die weitere Führungsfläche 24 in einem montierten Zustand entlang einer Bewegungsstrecke des zweiten Bedienelements 18 zwischen zumindest zwei entlang der Bewegungsstrecke des zweiten Bedienelements 18 beabstandet angeordneten Bewegungsbegrenzungselementen 30, 32 der Betätigungseinheit 14 angeordnet (Figur 5). Die zumindest zwei Bewegungsbegrenzungselemente 30, 32 sind zu einer Begrenzung einer mit der Führungsfläche 22 zusammenwirkenden Gegenführungsfläche 40 der Betätigungseinheit 14 vorgesehen. Die zumindest zwei Bewegungsbegrenzungselemente 30, 32 erstrecken sich zumindest im Wesentlichen quer zur Gegenführungsfläche 40 der Betätigungseinheit 14. Die Gegenführungsfläche 40 ist einstückig mit dem Werkzeugmaschinengehäuse 46 ausgebildet. Die Betätigungseinheit 14 weist ferner eine weitere Gegenführungsfläche (hier nicht näher dargestellt) auf, die dazu vorgesehen ist, mit der weiteren Führungsfläche 24 des zweiten Bedienelements 18 zusammenzuwirken. Somit sind die Führungsfläche 22 und die weitere Führungsfläche 24 in einem im Werkzeugmaschinengehäuse 46 montierten Zustand des zweiten Bedienelements 18, betrachtet entlang einer zumindest im Wesentlichen parallel zur Bewegungsachse 28 des zweiten Bedienelements 18 verlaufenden Richtung, zwischen der Gegenführungsfläche 40 und der weiteren Gegenführungsfläche angeordnet. Somit gleitet die Führungsfläche 22 bei einer Bewegung des zweiten Bedienelements 18 auf der Gegenführungsfläche 40 und die weitere Führungsfläche 24 gleitet auf der weiteren Gegenführungsfläche.

Die Schalteinheit 12 umfasst zumindest einen Grundkörper 42, der an dem ersten Bedienelement 16 fixiert ist. Hierzu weist das erste Bedienelement 16 eine Befestigungseinheit 60 auf. Die Befestigungseinheit 60 ist einstückig mit dem ersten Bedienelement 16 ausgebildet. Somit wird die Schalteinheit 12 zusammen mit dem ersten Bedienelement 16 bewegt. Das erste Bedienelement 16 ist drehbar um eine Bewegungsachse 72 des ersten Bedienelements 16 gelagert. Die Bewegungsachse 72 des ersten Bedienelements 16 wird von einer Mittelachse eines weiteren einstückig mit dem Werkzeugmaschinengehäuse 46 ausgebildeten Lagerbolzens 74 gebildet. Zu einer drehbaren Lagerung des ersten Bedienelements 16 wirkt eine Lagerfläche 90 des ersten Bedienelements 16 mit einer Mantelfläche des weiteren Lagerbolzens 74 zusammen. Somit weist das erste Bedienelement 16 hinsichtlich einer drehbaren Lagerung eine zum zweiten Bedienelement 18 analog ausgebildete Lagerung auf.

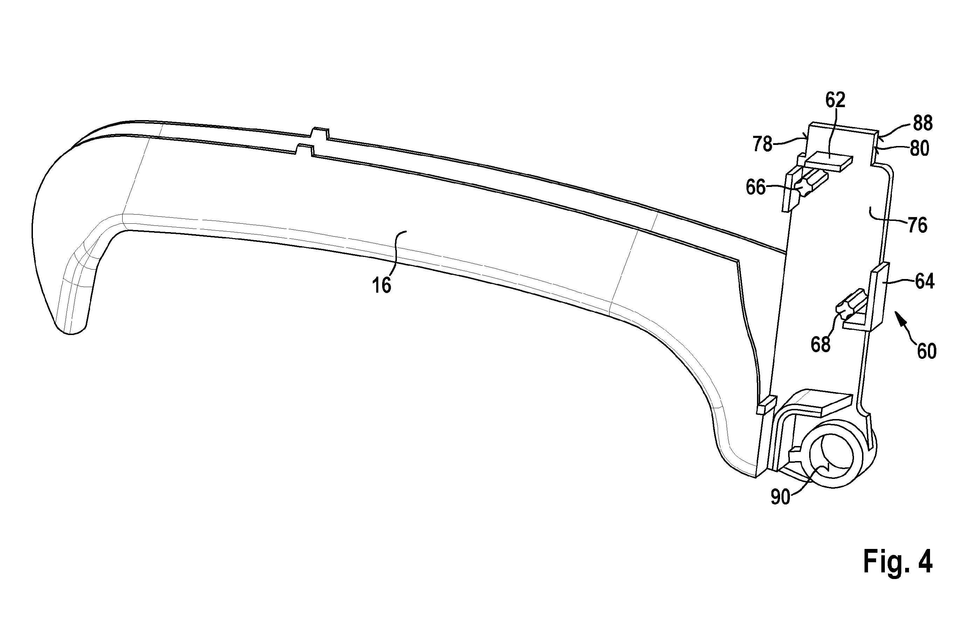

Die Befestigungseinheit 60 des ersten Bedienelements 16 ist als eine Formschlusseinheit ausgebildet. Hierbei umfasst die Befestigungseinheit 60 zwei Klemmelemente 62, 64 und zwei Drehverhinderungselemente 66, 68 (Figur 4). In einem montierten Zustand der Schalteinheit 12 üben die Klemmelemente 62, 64 eine Klemmkraft auf den Grundkörper 42 aus. Die Drehverhinderungselemente 66, 68 greifen durch Ausnehmungen im Grundkörper 42 und verhindern dadurch ein Verdrehen des Grundkörpers 42. Der Grundkörper 42 ist als Schaltgehäuse ausgebildet. Ein Schaltelement 70 der Schalteinheit 12 ist beweglich am Grundkörper 42 gelagert. Das Schaltelement 70 ist translatorisch am Grundkörper 42 gelagert. Hierbei ist das Schaltelement 70 auf eine, einem Fachmann bereits bekannte Weise zu einem Öffnen und/oder zu einem Schließen eines Schaltkreises bzw. eines Stromkreises der Schalteinheit 12 vorgesehen. Das Schaltelement 70 wird infolge einer gemeinsamen Betätigung des ersten Bedienelements 16 und des zweiten Bedienelements 18 durch die Schalterbetätigungsfläche 54 des Schalterbetätigungsfortsatzes 26 betätigt (Figur 7).

Zudem ist die Befestigungseinheit 60 an einem zumindest im Wesentlichen senkrecht zur Bewegungsachse 72 des ersten Bedienelements 16 verlaufenden Aufnahmefortsatz 76 gebildet. Der Aufnahmefortsatz 76 umfasst zudem Anschlagflächen 78, 80 des ersten Bedienelements 16, die mit weiteren Bewegungsbegrenzungselementen 82, 84 der Betätigungseinheit 14 zu einer Begrenzung einer Bewegungsstrecke des ersten Bedienelements 16 zusammenwirken. Eines der weiteren Bewegungsbegrenzungselemente 82, 84 ist einer unbetätigten Position des ersten Bedienelements 16 zugeordnet und eines der weiteren Bewegungsbegrenzungselemente 82, 84 ist einer betätigten Position des ersten Bedienelements 16 zugeordnet. Ferner begrenzen die weiteren Bewegungsbegrenzungselemente 82, 84 eine Gegenführungsfläche 86, die mit einer Fortsatzführungsfläche 88 des Aufnahmefortsatzes 76 zusammenwirkt. Mittels eines Zusammenwirkens der Gegenführungsfläche 86 und der Fortsatzführungsfläche 88 wird eine Querbewegung des ersten Bedienelements 16 zumindest in eine Richtung während einer Bewegung des ersten Bedienelements 16 zumindest weitestgehend verhindert.

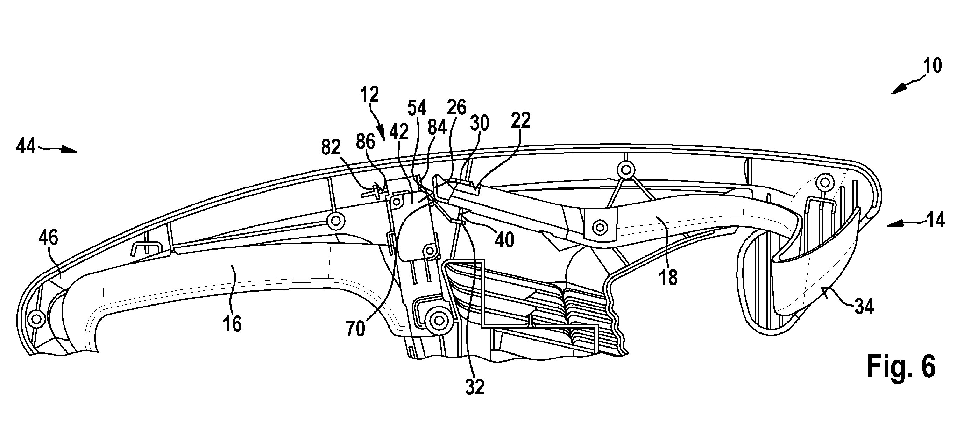

In einem Betriebszustand, in dem ein Bediener der die Werkzeugmaschinensicherheitsschaltvorrichtung 10 aufweisende Werkzeugmaschine 44 lediglich das zweite Bedienelement 18 betätigt, liegt eine der Anschlagflächen 36, 38 des zweiten Bedienelements 18 an einem der Bewegungsbegrenzungselemente 30, 32 an, das einem betätigten Zustand des zweiten Bedienelements 18 zugeordnet ist (Figur 6). Die Schalterbetätigungsfläche 54 des Schalterbetätigungsfortsatzes 26 ist hierbei beabstandet von dem Schaltelement 70 angeordnet. In diesem Betriebszustand befindet sich die Schalteinheit 12 in einem unaktivierten Schaltzustand, wodurch die Antriebseinheit 48 deaktiviert ist.

In einem Betriebszustand, in dem ein Bediener der Werkzeugmaschine 44 lediglich das erste Bedienelement 16 betätigt, liegt eine der Anschlagflächen 78, 80 des ersten Bedienelements 16 an einem der weiteren Bewegungsbegrenzungselemente 82, 84 an, das einem betätigten Zustand des ersten Bedienelements 16 zugeordnet ist (Betriebszustand hier nicht dargestellt). Die Schalterbetätigungsfläche 54 des Schalterbetätigungsfortsatzes 26 ist hierbei ebenfalls beabstandet von dem Schaltelement 70 angeordnet. In diesem Betriebszustand befindet sich die Schalteinheit 12 somit ebenfalls in einem unaktivierten Schaltzustand, wodurch die Antriebseinheit 48 deaktiviert ist.

In einem Betriebszustand, in dem der Bediener der Werkzeugmaschine 44 das erste Bedienelement 16 und das zweite Bedienelement 18 gemeinsam betätigt, liegt eine der Anschlagflächen 78, 80 des ersten Bedienelements 16 an einem der weiteren Bewegungsbegrenzungselemente 82, 84 an, das einem betätigten Zustand des ersten Bedienelements 16 zugeordnet ist und eine der Anschlagflächen 36, 38 des zweiten Bedienelements 18 an einem der Bewegungsbegrenzungselemente 30, 32 an, das einem betätigten Zustand des zweiten Bedienelements 18 zugeordnet ist (Figur 7). In diesem Betriebszustand wird das Schaltelement 70 der Schalteinheit 12 durch die Schalterbetätigungsfläche 54 des Schalterbetätigungsfortsatzes 26 betätigt. Somit befindet sich die Schalteinheit 12 in einem aktivierten Schaltzustand, wodurch die Schalteinheit 12 die Antriebseinheit 48 aktiviert.

## Patentansprüche

1. Werkzeugmaschinensicherheitsschaltvorrichtung, insbesondere Handwerkzeugmaschinensicherheitsschaltvorrichtung, mit zumindest einer Schalteinheit (12) und mit zumindest einer Betätigungseinheit (14), die zu einer Betätigung der Schalteinheit (12) zumindest zwei beweglich gelagerte Bedienelemente (16, 18) aufweist, die infolge einer gemeinsamen Betätigung die Schalteinheit (12) in zumindest einen aktivierten Schaltzustand versetzen und die jeweils zumindest eine Lagerfläche (20, 90) aufweisen, **dadurch gekennzeichnet, dass** zumindest eines der Bedienelemente (16, 18) zumindest eine von der Lagerfläche (20) des zumindest einen Bedienelements (16, 18) verschiedene Führungsfläche (22, 24) zu einer zumindest weitestgehenden Vermeidung einer Querbewegung zumindest eines Teilbereichs des zumindest einen Bedienelements (16, 18) während einer Bewegung des zumindest einen Bedienelements (16, 18) aufweist.

2. Werkzeugmaschinensicherheitsschaltvorrichtung nach Anspruch 1, **dadurch gekennzeichnet, dass** die Führungsfläche (22, 24) in einem Bereich eines Schalterbetätigungsfortsatzes (26) des zumindest einen Bedienelements (16, 18) angeordnet ist.

3. Werkzeugmaschinensicherheitsschaltvorrichtung nach einem der vorhergehenden Ansprüche, **dadurch gekennzeichnet, dass** die Führungsfläche (22, 24) sich in einer Ebene erstreckt, die zumindest im Wesentlichen senkrecht zu einer Bewegungsachse (28) des zumindest einen Bedienelements (16, 18) verläuft.

4. Werkzeugmaschinensicherheitsschaltvorrichtung nach einem der vorhergehenden Ansprüche, **dadurch gekennzeichnet, dass** die Führungsfläche (22, 24) in einem montierten Zustand entlang einer Bewegungsstrecke des zumindest einen Bedienelements (16, 18) zwischen zumindest zwei entlang der Bewegungsstrecke des zumindest einen Bedienelements (16, 18) beabstandet angeordneten Bewegungsbegrenzungselementen (30, 32) der Betätigungseinheit (14) angeordnet ist.

5. Werkzeugmaschinensicherheitsschaltvorrichtung nach einem der vorhergehenden Ansprüche, **dadurch gekennzeichnet, dass** die Führungsfläche (22, 24) an einem Ende des zumindest einen Bedienelements (16, 18) angeordnet ist, das von einer Bediengrifffläche (34) des zumindest einen Bedienelements (16, 18) abgewandt ist.

6. Werkzeugmaschinensicherheitsschaltvorrichtung nach einem der vorhergehenden Ansprüche, **dadurch gekennzeichnet, dass** die Führungsfläche (22, 24) zumindest von einer Anschlagfläche (36, 38) des zumindest einen Bedienelements (16, 18) begrenzt wird.

7. Werkzeugmaschinensicherheitsschaltvorrichtung nach einem der vorhergehenden Ansprüche, **dadurch gekennzeichnet, dass** die Betätigungseinheit (14) zumindest zwei Bewegungsbegrenzungselemente (30, 32) zu einer Begrenzung einer mit der Führungsfläche (22, 24) zusammenwirkenden Gegenführungsfläche (40) der Betätigungseinheit (14) aufweist.

8. Werkzeugmaschinensicherheitsschaltvorrichtung nach einem der vorhergehenden Ansprüche, **dadurch gekennzeichnet, dass** die Betätigungseinheit (14) zumindest zwei Bewegungsbegrenzungselemente (30, 32) umfasst, die sich zumindest im Wesentlichen quer zu einer Gegenführungsfläche (40) der Betätigungseinheit (14) erstrecken.

9. Werkzeugmaschinensicherheitsschaltvorrichtung nach einem der vorhergehenden Ansprüche, **dadurch gekennzeichnet, dass** die Schalteinheit (12) zumindest einen Grundkörper (42) umfasst, der an zumindest einem der Bedienelemente (16, 18) fixiert ist.

10. Werkzeugmaschine, insbesondere tragbare Werkzeugmaschine, mit einer Werkzeugmaschinensicherheitsschaltvorrichtung nach einem der vorhergehenden Ansprüche.
